# EUROPÄISCHE PATENTSCHRIFT

(11) **EP 2 451 324 B1**
(45) Veröffentlichungstag und Bekanntmachung des Hinweises auf die Patenterteilung: **10.09.2014**
(21) Anmeldenummer: 10730094.9
(22) Anmeldetag: 02.07.2010
(51) Int. Cl.: A47J 31/36

(54) **BRÜHGRUPPE, INSBESONDERE FÜR EINE KAFFEEMASCHINE**
BREWING UNIT, IN PARTICULAR FOR A COFFEE MAKER
MODULE D'INFUSION, EN PARTICULIER POUR UNE MACHINE À CAFÉ

(30) Priorität: 09.07.2009 DE 102009032677
(43) Veröffentlichungstag der Anmeldung: 16.05.2012
(73) Patentinhaber: Balkau, Werner, 8762 Schwändi (CH)
(72) Erfinder: Balkau, Werner, 8762 Schwändi (CH)
(74) Vertreter: Maser, Jochen
(86) Internationale Anmeldenummer: PCT/EP2010/003950
(87) Internationale Veröffentlichungsnummer: WO 2011/003535

(56) Entgegenhaltungen:
- EP-A1- 0 468 915
- EP-A1- 2 036 467
- DE-B3-102007 042 379

## Beschreibung

Die Erfindung betrifft eine Brühgruppe, insbesondere für eine Kaffeemaschine zur Zubereitung von Kaffee und Espresso.

Aus der DE 10 2007 042 379 B3 geht eine Brühgruppe für eine Kaffeemaschine hervor, welche eine Brühkammer zur Aufnahme von gemahlenem Kaffeemehl umfasst. Des Weiteren umfasst diese Brühkammer einen Brühkolben für die Verdichtung des in der Brühkammer befindlichen Kaffeemehls sowie einen Zuführanschluss für Heißwasser als auch einen Ablaufanschluss für das Filtrat. Darüber hinaus ist in der Brühgruppe eine Befüllöffnung für Kaffeemehl und eine Entleeröffnung zum Auswerfen des Kaffeekuchens vorgesehen. Diese Brühgruppe ist für den Einsatz von Kaffeevollautomaten vorgesehen, bei welchen eine Portion Kaffee nach folgendem üblichem Ablaufprinzip bei Kaffeevollautomaten hergestellt wird:
Die Kaffeebohnen werden zu einer Portion Kaffeemehl oder -pulver gemahlen und dass Kaffeemehl wird in eine Brühkammer der Brühgruppe geladen. Das Kaffeemehl wird in der Brühkammer der Brühgruppe verdichtet. Durch das verdichtete Kaffeemehl wird mit Hochdruck von beispielsweise 15 bar heißes Wasser gepumpt. Der entstehende Kaffee, also das Filtrat, läuft durch einen Auslauf in eine bereitzustellende Tasse. Der feuchte Kaffeemehlrest, auch Trester oder Kaffeekuchen genannt, wird aus der Brühgruppe ausgestoßen.

Um diese Ablaufprinzipien zu verwirklichen umfasst die Brühgruppe gemäß der DE 10 2007 042 379 B2 einen ersten Stellantrieb, der innerhalb eines feststehenden Zylinders einen axial verstellbaren Kolben umfasst, um die befüllte Brühkammer zu verdichten. Nach dem Brühvorgang ist ein zweiter Stellantrieb mit einem Kolben vorgesehen, der ermöglicht, dass der Kaffeekuchen ausgeworfen wird. Dabei sind aufwändige Ansteuerungen und Mechaniken für den ersten und zweiten Kolben sowie deren Antriebe erforderlich. Darüber hinaus ist ein erheblicher Bauraum erforderlich, um die einzelnen Funktionen zur Erfüllung des Ablaufprinzips durchzuführen.

Aus der EP 0468915 A1 ist eine weitere Brühgruppe bekannt.

Aus der DE 20 2005 020 774 U1 ist des Weiteren eine Kaffeemaschine bekannt, die als Kaffeevollautomat gemäß dem vorbeschriebenen Ablaufprinzip betrieben werden kann. Diese Kaffeemaschine umfasst einen Revolvermechanismus mit mehreren auf einer Drehscheibe angeordneten Brühkammern, die taktweise von einer Beschickungsstation in eine Brühstation und anschließend in eine Entleerungsstation durch eine Rotation des Revolvermechanismus weitergetaktet werden. Diese Anordnung ermöglicht eine geringe Anzahl von bewegten Teilen. Jedoch weist diese Anordnung den Nachteil auf, dass ein voluminöser Aufbau erforderlich ist, da die Beschickungsstation, Brühstation, Entleerungs-station und eine Leerstation jeweils getrennt voneinander über den Umfang des Drehtellers verteilt angeordnet sind. Darüber hinaus ist erforderlich, dass drei oder vier Brühkammern bereitgestellt werden müssen, um einen Betrieb des Revolvermechanismus zu ermöglichen.

Der Erfindung liegt deshalb die Aufgabe zugrunde, eine Brühgruppe zu schaffen, welche eine kompakte Anordnung und eine einfache Ansteuerung ermöglicht, um die einzelnen Arbeitsschritte eines Ablaufprinzips eines Kaffeevollautomaten zur Ausgabe einer Portion Kaffee oder Espresso zu ermöglichen.

Diese Aufgabe wird erfindungsgemäß durch eine Brühgruppe nach Anspruch 1 ermöglicht Durch die ledigliche Ansteuerung einer Linearbewegung kann der Brühkammerschlitten in einfacher Weise innerhalb des Brühkammerrahmens der Brühgruppe vorzugsweise hin und her verfahrbar angesteuert sein, so dass entsprechend dem Ablaufprinzip die jeweilige Position nacheinander eingenommen wird und eine Portion Kaffee oder Espresso aus einem Kaffeevollautomaten ausgegeben werden kann. Durch die Ansteuerung des Brühkammerschlittens mit einer reinen Linearbewegung kann eine kompakte und konstruktiv einfache Ausgestaltung für den Antrieb und den Aufbau des Brühkammerrahmens erzielt werden. Darüber hinaus sind Stellantriebe, die lediglich einen linearen Antrieb erfordern, kostengünstig und kompakt in der Bauweise. Dadurch kann eine kleinvolumige und kostengünstige Baugruppe erzielt werden.

Nach einer vorteilhaften Ausgestaltung der Brühgruppe ist vorgesehen, dass der Brühkammerschlitten durch eine Führung, insbesondere Linearführung, verfahrbar in dem Brühkammerrahmen aufgenommen ist. Dadurch wird ein definierter Bewegungsraum vorgegeben. Die Führung ist dabei bevorzugt geradlinig ausgebildet, so dass eine vereinfachte Bewegungsführung des Brühkammerschlittens gegeben ist. Vorzugsweise ist die Führung rechtwinklig zur Befüllöffnung ausgerichtet, wodurch ein einfaches Positionieren der Brühkammer unterhalb der Füllöffnung ermöglicht ist. Analoges gilt für die Positionierung zu einem Brühkolben. Nach einer weiteren bevorzugten Ausgestaltung der Brühgruppe ist vorgesehen, dass die Führung des Brühkammerschlittens zumindest eine Langlochausnehmung: mit einer darin geführten Lagerachse umfasst, die mit dem Antrieb für den Brühkammerschlitten bewegungsgekoppelt ist. Dies ermöglicht zum einen eine einfache Führung des Brühkammerschlittens durch dessen Lagerachse innerhalb des Brühkammerrahmens und andererseits eine einfache Anbindung von außen an den Antrieb. Durch die bewegungsgekoppelte Anordnung ist des Weiteren ermöglicht, dass die Brühgruppe in einfacher Weise aus der Kaffeemaschine herausnehmbar ist. Vorzugsweise ist die Bewegungskopplung als lösbare Rastschnappverbindung oder dergleichen ausgebildet.

Eine weitere bevorzugte Ausgestaltung der Brühgruppe sieht vor, dass der elektrische Antrieb als Linearantrieb ausgebildet ist und vorzugsweise einen Riemen-, Seil- oder Kettenantrieb umfasst, wobei der Riemen, das Seil oder die Kette in der Größe im Wesentlichen der Langlochausnehmung der Führung entspricht oder größer ausgebildet ist und dass durch einen an dem Riemen, dem Seil oder der Kette angeordneten Mitnehmer die Lagerachse des Brühkammerschlittens verfahrbar angetrieben ist. Dadurch können wiederum kostengünstige mechanische Antriebe eingesetzt werden, die bauraumsparend sind.

Die erfindungsgemäße Ausgestaltung der Brühgruppe sieht vor, dass die Brühkammer einen Brühkammerkolben aufweist, der innerhalb der Brühkammer auf und ab bewegbar vorgesehen ist und dass eine Hubstellung des Brühkammerkolbens in Abhängigkeit der Linearbewegung des Brühkammerschlittens in die Befüllposition; Brühposition, Brühkammerentleerungsposition oder Abstreiferposition ansteuerbar ist. Durch diese Bewegungskopplung kann sowohl die Aufnahme des Kaffeemehls für ein anschließendes Brühen als auch ein Auswerfen des Kaffeekuchens über den Brühkammerkolben ermöglicht werden. Aufgrund der Ausgestaltung des auf und ab bewegbaren Brühkammerkolbens in der Brühkammer und der Bewegungskopplung mit der Verfahrposition des Brühkammerschlittens genügt eine Ansteuerung des Brühkammerschlittens durch eine Linearbewegung.

Des Weiteren ist vorgesehen, dass der Brühkammerkolben eine Brühkammerwelle aufweist, die gegenüber dem Brühkammerschlitten hervorsteht und in einer Kulisse geführt ist, welche vorzugsweise benachbart zur Linearführung angeordnet ist. Dadurch kann die Auf- und Abbewegung des Brühkammerkolbens zwangsweise während der Linearbewegung des Brühkammerschlittens angesteuert werden. Durch die benachbarte Anordnung kann wiederum eine kompakte Bauweise erzielt werden. Bevorzugt ist die Kulisse oberhalb oder unterhalb der Linearführung im Brühkammerrahmen angeordnet bzw. eingearbeitet.

Eine weitere bevorzugte Ausgestaltung der Erfindung sieht vor, dass die Lagerachse des Brühkammerschlittens und die Brühkammerwelle in einer gemeinsamen Achse insbesondere rechtwinklig zur Linearbewegung ausgerichtet sind. Dadurch kann eine leichtgängige Anordnung und sichere Auf- und Abbewegung des Brühkammerkolbens während der Verfahrbewegung des Brühkammerschlittens erzielt werden.

Die Kulisse zur Ansteuerung der Hubbewegung des Brühkammerkolbens in der Brühkammer weist bevorzugt einen liegenden, U-förmigen Bahnverlauf mit einer zwischen den beiden Schenkeln verlaufenden Querverbindung auf. Durch diese Kulissenführung können sämtliche Positionen (Befüllposition, Brühposition, Brühkammerentleerungsposition und Abstreiferposition) eingenommen werden, wobei gleichzeitig entsprechend der eingenommenen Position der Brühkammerkolben in einer oberen
oder unteren Endstellung oder sonstigen Hublage angeordnet ist. Dabei ist bevorzugt vorgesehen, dass der erste bzw. untere Schenkel den Brühkammerkolben in einer unteren Position der Brühkammer positioniert und der zweite bzw. obere Schenkel den Brühkammerkolben bündig zu einer Stirnfläche der Brühkammer anordnet.

Der Brühkammerschlitten ist durch eine Linearbewegung in die Befüllposition überführbar, in der der Befüllkammerschlitten unterhalb der Befüllöffnung positioniert ist und der Brühkammerkolben in einer unteren Endlage durch die Anordnung der Brühkammerwelle im ersten Schenkel der Kulisse positioniert ist. In dieser Befüllposition kann von einem Mahlwerk frisch gemahlenes Kaffeemehl in die Brühkammer durch die vorzugsweise trichterförmig ausgebildete Befüllöffnung eingefüllt werden.

Der Brühkammerschlitten ist bevorzugt durch eine weitere Linearbewegung aus der Befüllposition in eine Brühposition überführbar. Dabei wird die Brühkammer unterhalb eines Brühkolbens für den nachfolgenden Brühvorgang positioniert und die Brühkammerwelle entlang des ersten Schenkels in der Kulisse geführt.

Gleichzeitig ist vorteilhafterweise vorgesehen, dass ein Einlassanschluss, der vorteilhafterweise fest mit dem Brühkammerkolben verbunden ist, mit einem Ventil eines Erhitzers verbindbar ist. Durch diese Schnittstelle wird die Bewegungsfreiheit des Brühkammerschlittens bzw. der Brühkammer erhöht.

Nach Einnahme der Brühposition wird bevorzugt über einen Motor der Brühkolben abgesenkt, so dass die Brühkammer geschlossen wird, um anschließend heißes Wasser durch die Brühkammer hindurchzuführen. Ein Anpressdruck des Brühkolbens zum Verdichten des Kaffeemehls- bzw. -pulvers in der Brühkammer ist bevorzugt durch einen mit dem Motor gekoppelten Drehmomentsensor oder über eine erfasste Leistungsaufnahme des Motors einstellbar.

Nach dem Brühen und Abheben des Brühkolbens aus der Brühkammer ist bevorzugt vorgesehen, dass der Brühkammerschlitten in die Brühkammerentleerungsposition überführbar ist, wobei die Brühkammerwelle über die Querverbindung und einer im ersten Schenkel angeordneten Sperre zwangsweise in den zweiten Schenkel der Kulisse verfahrbar ist. Dadurch wird der Brühkammerkolben bündig zur Stirnfläche der Brühkammer angehoben und der Kaffeekuchen aus der Brühkammer herausgehoben. Somit ist die Brühkammer entleert. Aufgrund der Anordnung des Brühkammerschlittens unterhalb der Entleerungsöffnung ist ermöglicht, dass der nach oben herausgeführte Kaffeekuchen teilweise in die Entleerungsöffnung eintreten kann.

Durch eine weitere Linearbewegung ist bevorzugt vorgesehen, dass der Brühkammerschlitten aus der Brühkammerentleerungsposition in die Abstreiferposition überführbar ist. Während dieser Verfahrbewegung wird der Brühkammerschlitten unterhalb einer Abstreiferkante hindurchgeführt. Dadurch wird der Kaffeekuchen zurückgehalten und von der Stirnfläche der Brühkammer abgestreift. Durch eine unmittelbar unterhalb der Befüllöffnung positionierten Entleerungsöffnung kann der Kaffeekuchen in eine Auffangschale gelangen und aus dem Brühkammerrahmen herausgeführt werden.

Bevorzugt ist vorgesehen, dass während der Verfahrbewegung von einer Brühkammerentleerungsposition in die Abstreiferposition die Querverbindung durch eine Sperre geschlossen ist. Dadurch wird eine zwangsweise Bewegung entlang des zweiten Schenkels erzielt, so dass ein vorzeitiges Absenken des Brühkammerkolbens verhindert ist und ein vollständiges Abstreifen und Herausführen des Kaffeekuchens aus der Brühkammer erzielt wird.

Bevorzugt wird eine weitere Linearbewegung angesteuert, durch welche der Brühkammerschlitten aus der Abstreiferposition in die Befüllposition überführbar ist. Dabei durchläuft die Brühkammerwelle den zweiten Schenkel sowie den U-förmigen Bogen der Kulisse bis in den ersten Schenkel, wobei der Brühkammerkolben wieder in eine untere Hubendlage übergeführt ist.

Des Weiteren ist bevorzugt vorgesehen, dass zumindest während der Linearbewegung, bei der der Brühkammerschlitten von der Abstreiferposition in die Befüllposition übergeführt wird, eine an der Stirnfläche der Brühkammer angeordnete Abstreiferlippe entlang eines Obersiebes des Brühkolbens geführt wird, so dass das Obersieb während dieser Linearbewegung gleichzeitig von noch anhaftendem Kaffeemehl befreit wird.

Die Brühgruppe umfasst vorteilhafterweise für den Einsatz von Kaffeekapseln oder Kaffeepads eine Brühkammer und einen Brühkolben, die jeweils einen Anstich für den Kapselboden und den Kapseldeckel aufweisen. Dadurch kann die Brühgruppe auch für den Betrieb mit Kaffeepads ausgerüstet sein. Alternativ können diese Anstiche auch separat eingesetzt oder nachgerüstet werden, so dass die Brühgruppe für frisch gemahlenes Kaffeemehl als auch für frisches Kaffeemehl in Kaffeepads einsetzbar ist.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Schnittdarstellung einer erfindungsgemäßen Brühgruppe in einem Kaffeevollautomat,
- Figur 2: eine perspektivische Seitenansicht auf die Brühgruppe,
- Figur 3: eine perspektivische Ansicht auf eine Unterseite der Brühgruppe gemäß Figur 2,
- Figur 4: eine Explosionsdarstellung der Komponenten der Brühgruppe gemäß Figur 2,
- Figur 5: eine schematische Seitenansicht auf einen Brühgruppenrahmen,
- Figur 6: einen schematischen Teilschnitt der Brühgruppe mit der Brühkammer in einer Befüllungsposition,
- Figur 7: einen schematischen Teilschnitt der Brühgruppe mit der Brühkammer in einer Brühposition,
- Figur 8: einen schematischen Teilschnitt der Brühgruppe mit der Brühkammer in einer Brühkammerentleerungsposition,
- Figur 9: einen schematischen Teilschnitt der Brühgruppe mit der Brühkammer in einer Abstreiferposition,
- Figur 10: einen schematischen Teilschnitt der Brühgruppe zur Aufnahme einer Kaffeekapsel und
- Figur 11: einen schematischen Teilquerschnitt der Brühgruppe gemäß Figur 10 mit der Brühkammer in einer Brühposition.

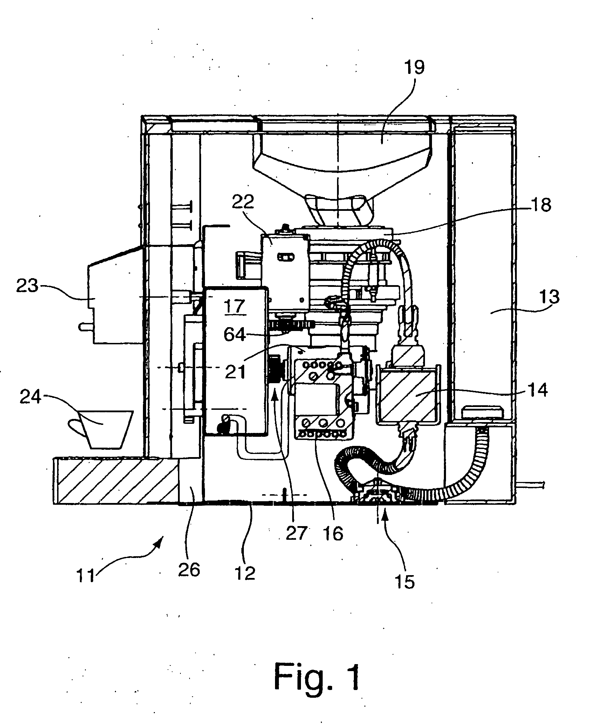

In Figur 1 ist eine schematische Seitenansicht einer Kaffeemaschine 11, insbesondere eines Kaffeevollautomaten, mit den einzelnen Komponenten dargestellt. In einem Gehäuse 12 der Kaffeemaschine 11 ist ein Wassertank 13 zur Bereitstellung von Frischwasser vorgesehen. Über eine Dosierpumpe 14 bzw. eine Pumpe mit vorgeschaltetem Durchflussmesser 15 gelangt Wasser in einen Erhitzer bzw. Boiler 16. Von dort aus gelangt die erhitzte und vorbestimmte Menge an Flüssigkeit zur Brühgruppe 17. Der Brühgruppe 17 wird vor dem Brühen der Flüssigkeit gemahlenes Kaffeemehl zugeführt. Dieses gelangt über ein Mahlwerk 18 in die Brühgruppe 17, wobei das Mahlwerk von einem Vorratsbehälter 19 bedarfsmäßig Kaffeebohnen entnimmt. Des Weiteren greift an der Brühgruppe 17 ein elektrischer Antrieb 21, insbesondere Linearantrieb, an sowie ein weiterer Motor 22, um die Brühgruppe 17, die nachfolgend noch beschrieben wird, zu betätigen. Eine gebrühte Flüssigkeit wird aus der Brühgruppe 17 herausgeführt und gelangt über einen Ausguss 23 in eine darunter bereitzustellende Tasse 24. Das feuchte Kaffeemehl bzw. der Trester, auch Kaffeekuchen genannt, gelangt in eine Auffangschale 26, welche zum Entleeren aus dem Gehäuse 12 herausziehbar ist.

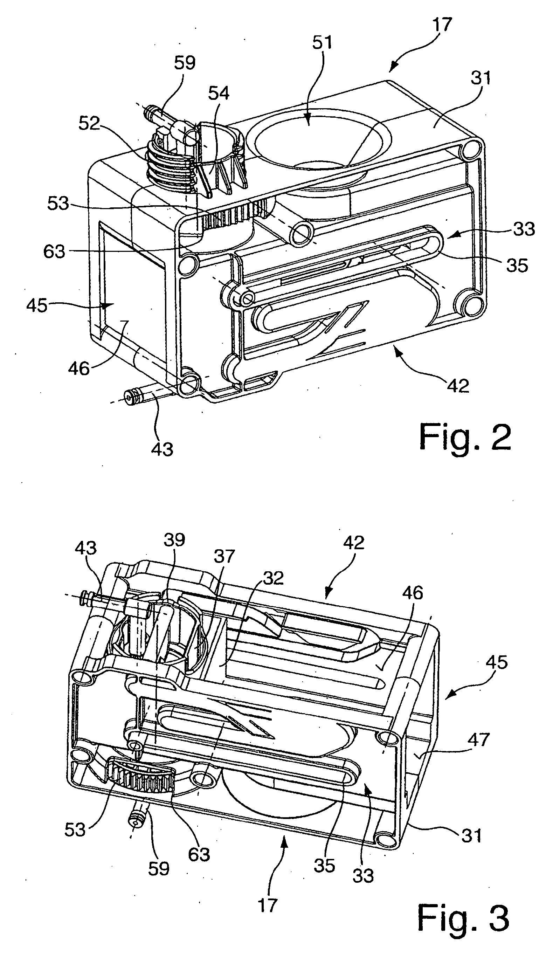

Die Brühgruppe 17 wird nachfolgend anhand den Figuren 2 bis 4 näher beschrieben. Ein Brühgruppenrahmen 31, der bevorzugt zweiteilig ausgebildet ist, damit dieser nach dem Komplettieren von weiteren Teilen einfach zusammengebaut werden kann, weist einen darin verschiebbar angeordneten Brühkammerschlitten 32 auf. Dieser Brühkammerschlitten 32 ist über eine Führung 33 in dem Brühkammerrahmen 31 verschiebbar geführt. Die Führung 33 umfasst eine an dem Brühkammerschlitten 32 angeordnete Lagerachse 34, welche in einer Langlochausnehmung 35 geführt ist. Diese Langlochausnehmung 35 kann beidseitig oder nur einseitig vorgesehen sein, so dass zumindest einseitig die Lagerachse 34 aus dieser Langlochausnehmung 35 herausführbar ist bzw. durch diese Langlochausnehmung 35 mit dem elektrischen Antrieb 21 verbindbar ist. Gegenüberliegend kann die Lagerachse 34 auch in einer Vertiefung geführt werden. Bevorzugt ist der Brühkammerschlitten 32 horizontal verfahrbar.

Die Lagerachse 34 ist mit einem nicht näher dargestellten Mitnehmer verbindbar. Bevorzugt ist eine Rasverbindung oder schnell lösbare Kupplung vorgesehen. Der Mitnehmer ist an einem Linearantrieb 27 befestigt, der beispielsweise als Riemenkette oder Seil ausgebildet ist. Dieser Linearantrieb 27 wirkt mit dem elektrischen Antrieb 21 zusammen, so dass der Brühkammerschlitten 32 entlang der Langlochausnehmung 35 hin und her bewegbar und verfahrbar ist.

Der Brühkammerschlitten 32 nimmt eine Brühkammer 36 auf, in der ein Brühkammerkolben 37 auf und ab bewegbar gelagert ist. Auf dem Brühkammerkolben 37 ist bevorzugt ein Filtersieb bzw. ein Untersieb 38 austauschbar befestigt. An dem Brühkammerkolben 37 ist eine Brühkammerwelle 39 vorgesehen, welche beidseitig gegenüber Seitenführungswänden 41 des Brühkammerschlittens 32 hervortreten und in eine Kulisse 42 eingreifen bzw. darin geführt sind. In beiden Halbschalen des Brühkolbenrahmens 31 ist jeweils eine Kulisse 42 angeordnet, um eine Hubbewegung des Brühkammerkolbens 37 zur Brühkammer 36 in Abhängigkeit der Verfahrposition des Brühkammerschlittens 32 innerhalb der Führung 33 einzunehmen. An einer Unterseite des Brühkammerkolbens 37 ist ein Einlaufanschluss 43 fest angeordnet, der mit einem nicht näher dargestellten Ventil zum Bezug von heißem Wasser aus dem Erhitzer 16 verbindbar ist.

Der Brühgruppenrahmen 31 umfasst eine nach unten offene U-förmige Brühkammerschlittenführung 45, in die der Brühkammerschlitten 32 so-wohl an den einander gegenüberliegenden Seitenwänden 46 und einem oberen Wandabschnitt 47 verschiebbar geführt ist. An einer Oberseite des Brühgruppenrahmens 31 ist eine Befüllöffnung 51 zum Einbringen von Kaffeemehl in die Brühkammer 36 vorgesehen. Benachbart dazu an der Oberseite des Brühgruppenrahmens 31 ist ein Brühkolben 52 auf und ab bewegbar durch ein Antriebsritzel 53 angeordnet, welches von dem Motor 22 angetrieben wird. Das Antriebsritzel 53 weist ein Innengewinde auf, welches an einem Außengewinde des Brühkolbens 52 angreift und diesen auf und ab bewegt. Am Außenumfang des Antriebsritzels 53 ist beispielsweise eine Verzahnung vorgesehen, um dieses Antriebsritzel 53 über ein am Motor 22 angeordnetes Zahnrad anzutreiben. An dem Brühgruppenrahmen 31 ist eine Verdrehsicherung 54 in Form von Stegen fest vorgesehen, welche in schlitzförmige Ausnehmungen 55 im Brühkolben 52 eingreift, so dass dieser durch die eingeleitete Drehbewegung des Antriebsritzels 53 auf und ab bewegbar ist. An einer Unterseite des Brühkolbens 52 ist bevorzugt auswechselbar ein Filtersieb bzw. Obersieb 56 vorgesehen. Des Weiteren umfasst der Brühkolben 52 stirnseitig einen Dichtungsring 57 zur Abdichtung des Brühkolbens 52 zum Brühgruppenrahmen 31 und zum Brühkammerschlitten 32. Gegenüberliegend ist an dem Brühkolben 52 ein Auslassanschluss 59 vorgesehen, der das in der Brühkammer 36 erzeugte Getränk zum Ausguss 23 führt.

Zur einfachen Positionierung des Antriebsritzels 53 wird dieses in einem Aufnahmeraum 61 des Brühgruppenrahmens 31 fixiert gehalten. Vor dem Zusammenbau des zweiteiligen Brühgruppenrahmens 31 ist das Antriebsritzel 53 zusammen mit dem Brühkolben 52 in dessen Führungsöffnung 62 einzusetzen und wird anschließend durch das Zusammensetzen der beiden Halbschalen des Brühgruppenrahmens 31 positioniert und das Antriebsritzel 53 in dem Aufnahmeraum 61 fixiert gehalten. Der Aufnahmeraum 61 weist seitliche Öffnungen 63 auf, so dass das Antriebsritzel 53 über ein Zahnrad 64 (Figur 1) des Motors 22 angetrieben wird.

An einer Stirnfläche 66 des Brühkammerschlittens 32, die an die Brühkammer 36 angrenzt, ist eine Abstreiferlippe 67 bzw. eine Reinigungslippe 67 für das Obersieb 56 vorgesehen. Der Brühkammerschlitten 32 weist des Weiteren Führungsabschnitte 68 auf, in der die Brühkammerwelle 39 geführt ist, so dass der Brühkammerkolben 37 in der Brühkammer 36 auf und ab bewegbar ist und gleichzeitig verdrehsicher aufgenommen ist.

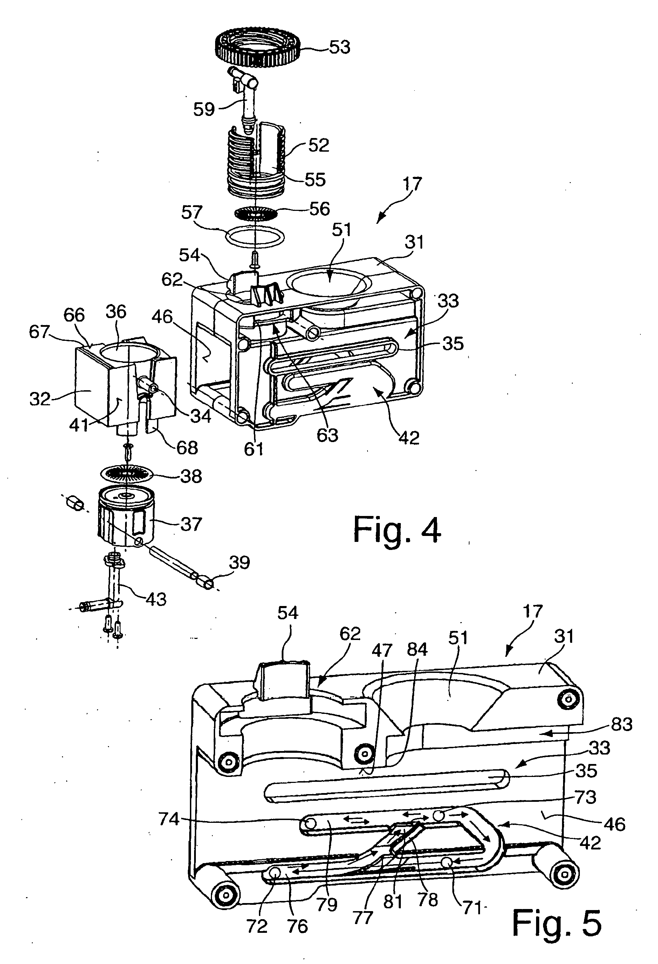

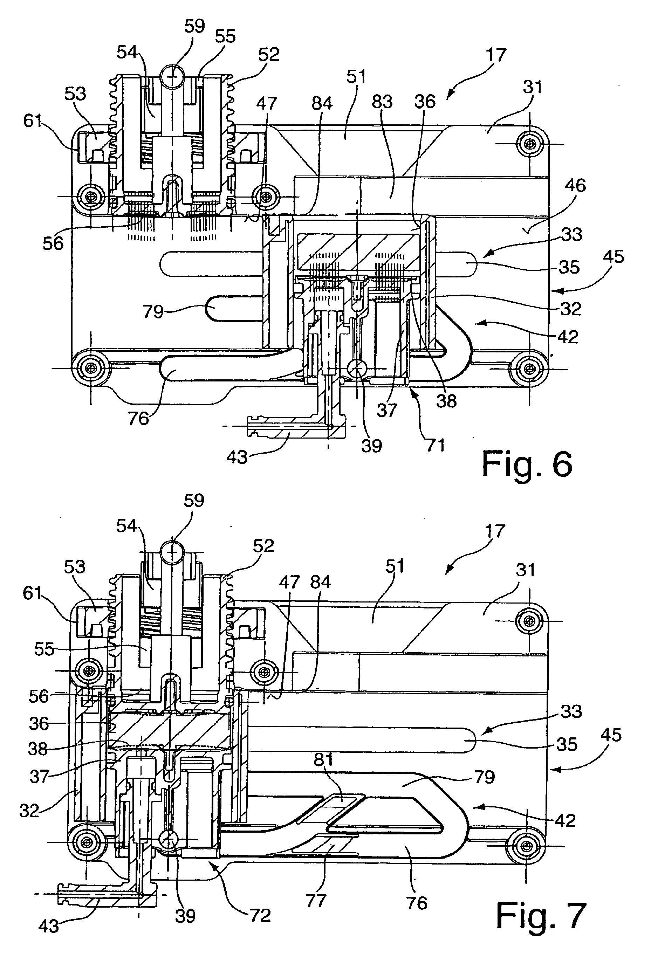

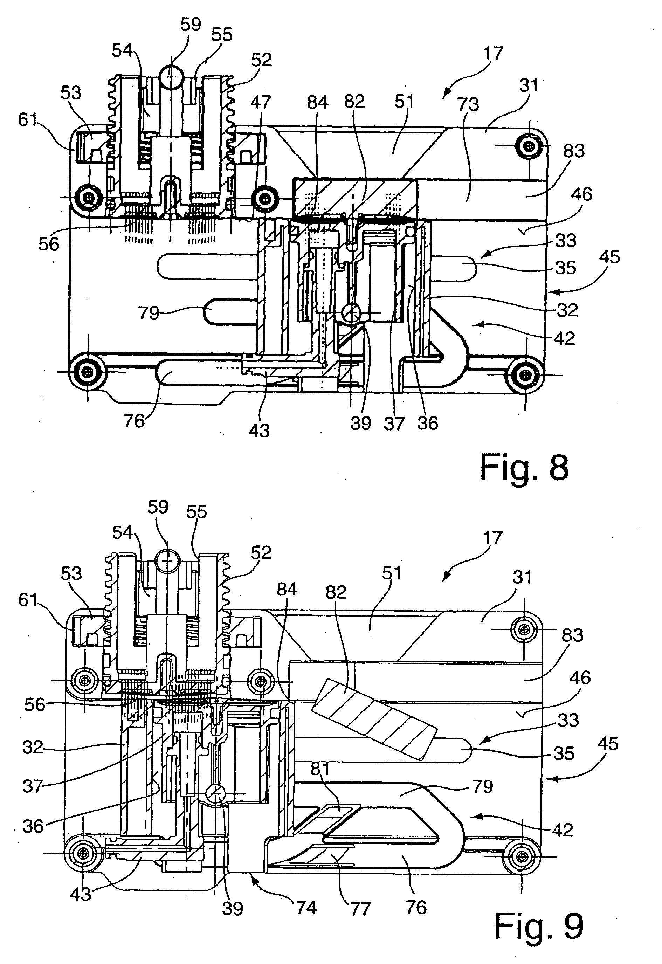

In Figur 5 ist eine Halbschale des Brühgruppenrahmens 31 perspektivisch dargestellt. In der Kulisse 42 ist die Verfahrbewegung des Brühkammerschlittens 32 sowie der Brühkammerkolben 37 zur Einnahme einer Befüllposition 71 gemäß Figur 6, einer Brühposition 72 gemäß Figur 7, einer Brühkammerentleerungsposition 73 gemäß Figur 8 und einer Abstreiferposition 74 gemäß Figur 9 dargestellt. Die in der Kulisse 42 dargestellten Punkte mit den Bezugsziffern 71 bis 74 stellen die Position der Brühkammerwelle 39 dar, welche in den jeweiligen Positionen eingenommen wird. Die Lagerachse 34 des Brühkammerschlittens 32 wird dabei lediglich in der Langlochausnehmung 35 hin und her bewegt, wobei diese in den einzelnen Positionen 71, 72, 73 und 74 jeweils senkrecht darüber liegend in der Langlochausnehmung positioniert ist.

Ein Arbeitszyklus der Brühgruppe 17 zur Herstellung eines Kaffeegetränkes wird nachfolgend näher beschrieben:
Der Brühkammerschlitten 32 befindet sich in einer Ausgangsposition bzw. in einer Befüllposition 71 gemäß Figur 6. Dabei ist die Brühkammer 36 unterhalb der Befüllöffnung 51 positioniert, um eine Portion Kaffeemehl aus dem Mahlwerk 18 aufzunehmen. Der Brühkammerkolben 37 befindet sich in einer unteren Position, da die Brühkammerwelle 39 in einem ersten bzw. unteren Schenkel 76 der Kulisse 42 geführt ist. Der Brühkolben 52 ist in einer oberen Endlage innerhalb der Führungsöffnung 62 positioniert bzw. bündig zu einem oberen Wandabschnitt 47 angeordnet.

Nach dem Befüllen der Brühkammer 36 mit Kaffeemehl wird eine erste Linearbewegung des Brühkammerschlittens 32 durch den Antrieb 21, insbesondere Linearantrieb, eingeleitet. Dabei wird die Brühkammerwelle 39 entlang des ersten Schenkels 76 in die Brühposition 72 gemäß Figur 7 übergeführt. Anschließend wird der Brühkolben 52 aufgrund einer Stellbewegung des elektrischen Motors 22 abgesenkt und greift in die Brühkammer 36 ein. Gleichzeitig beim Überführen des Brühkammerschlittens 32 in die Brühposition 72 wird der Zulauf 43 mit einem Ventil, insbesondere einer Art Rückschlagventil, das mit dem Boiler 16 in Verbindung steht, gekoppelt. Anschließend wir eine vorbestimmte Menge an heißem Wasser über den Einlaufanschluss 43 durch die Brühkammer 36 nach oben in den Auslassanschluss 59 gedrückt und zum Ausguss 23 geführt.

Der Motor 22 weist bevorzugt zur Drehmomentbegrenzung einen Drehmomentsensor auf. Sobald das eingestellte Drehmoment erreicht ist, wird die Zustellbewegung gestoppt und das gemahlene Kaffeemehl ist mit einem vorbestimmten Druck zusammengepresst, so dass eine gute Crema entsteht sowie eine Ein- bis Mehrtassenbrühung ermöglicht wird.

Nach dem Brühen wird der Brühkolben 52 nach oben bewegt, so dass durch eine weitere Linearbewegung des Brühkammerschlittens 32 aus einer Brühposition 72 in eine Brühkammerentleerungsposition 73 übergeführt werden kann. Dabei durchläuft die Brühkammerwelle 39 einen Verfahrweg, der zunächst entlang dem ersten Schenkel 76 erfolgt. Aufgrund einer Sperre 77 im ersten Schenkel 76 wird ein weiteres Verfahren entlang des ersten Schenkels 76 verhindert, so dass die Brühkammerwelle 39 über eine Querverbindung 78 in den zweiten Schenkel 79 der Kulisse 42 gelangt. Dabei wird eine weitere Sperre 81 überfahren, die jedoch ein Rückführen in entgegengesetzter Richtung verhindert. Durch das Überführen der Brühkammerwelle 39 aus dem ersten Schenkel 76 in den zweiten Schenkel 79 wird der Brühkammerkolben 37 innerhalb der Brühkammer 36 angehoben, so dass ein Kaffeekuchen 82 bzw. Trester aus der Brühkammer 36 herausgehoben wird, wie dies in Figur 8 dargestellt ist.

Durch die zunächst eingeleitete Linearbewegung, die ausschließlich horizontal im ersten Schenkel 76 erlaubt wird, wird der Einlassanschluss 43 von dem Ventil getrennt.

Damit der Kaffeekuchen 82 unterhalb der Befüllöffnung 51 anordenbar ist, weist die Brühkammerschlittenführung 45 eine weitere Vertiefung 83 auf, die mit dem oberen Wandabschnitt 47 eine Abstreiferkante 84 ausbildet.

Durch eine weitere Linearbewegung des Brühkammerschlittens 32 aus der Brühkammentleerungsposition 73 in die Abstreiferposition 74, welche in Figur 9 dargestellt ist, wird der Kaffeekuchen 82 durch die Abstreiferkante 84 in der Vertiefung 83 gehalten, wobei der Brühkammerschlitten 32 sowie die Brühkammer 36 unterhalb der Abstreiferkante 84 in die Abstreiferposition 74 unterhalb des Brühkolbens 52 positioniert werden. Dabei wird die Brühkammerwelle 39 entlang des zweiten Schenkels 79 der Kulisse 42 geführt. Die Brühkammer 36 bleibt dadurch geschlossen, so dass ein vollständiges Austragen des feuchten Kaffeekuchens 82 ermöglicht wird. Der Kaffeekuchen 82 kann aufgrund der nach unten offenen Brühkammerschlittenführung 45 in die Auffangschale 26 gelangen.

Ein Absenken des Brühkammerkolbens 37 während der Verfahrbewegung aus der Brühkammerentleerungsposition 73 in die Abstreiferposition 74 wird durch die Sperre 81 in der Querverbindung 78 verhindert.

Durch eine weitere Linearbewegung des Brühkammerschlittens 32 wird dieser aus einer Abstreiferposition 74 in eine Befüllposition 71 übergeführt. Dabei greift die Abstreiferlippe 67 an dem Obersieb 56 des Brühkolbens 52 an, so dass dieses gereinigt wird. Die Brühkammerwelle 39 wird entlang dem zweiten Schenkel 79 der Kulisse 42 über einen U-förmigen Endabschnitt oder Bogen in den ersten Schenkel 76 der Kulisse 42 übergeführt und somit abgesenkt, damit die Brühkammer für einen nachfolgenden Arbeitszyklus bereitgestellt ist.

Durch die Anordnung einer Führung 33 sowie einer Kulisse 42 wird ermöglicht, dass durch eine ausschließlich Linearbewegung des Brühgruppenschlittens 32 bzw. einer angetriebenen Linearbewegung der Brühkammer 36 ein Kaffeegetränk hergestellt wird, bei dem die Arbeitsstationen Befüllen, Brühen, Entleeren und Abstreifen vollautomatisch erfolgen.

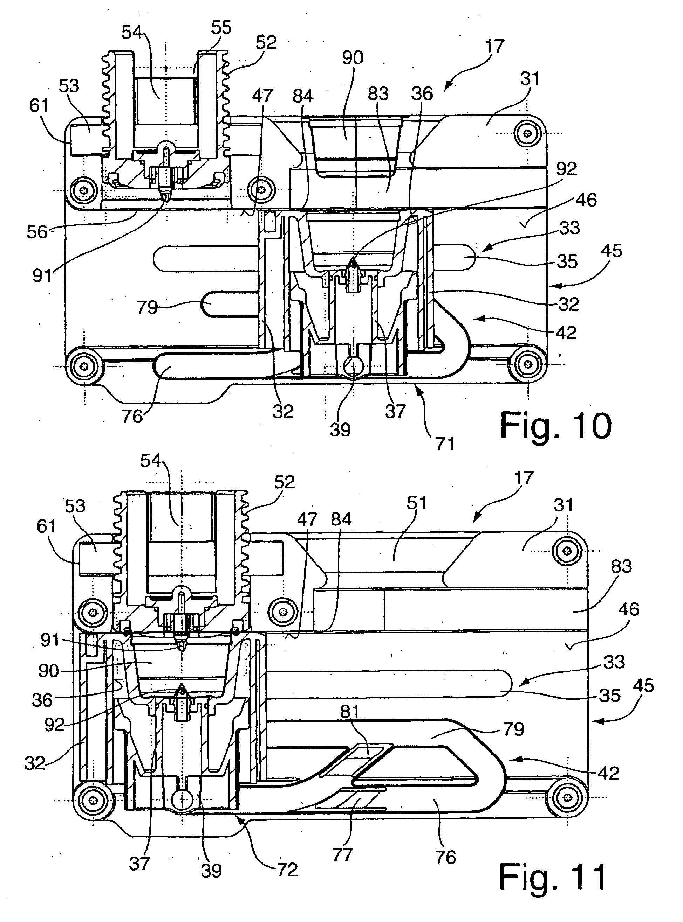

Eine alternative Ausführungsform der Brühgruppe 17 gemäß den Figuren 2 bis 9 ist in den Figuren 10 und 11 dargestellt. Diese alternative Ausführungsform der Brühgruppe 17 weicht lediglich dahingehend von der vorbeschriebenen Ausführungsform ab, dass die Brühkammer 36 sowie der Brühkolben 52 an den Einsatz eines Kaffeepads bzw. einer vorportionierten Kaffeekapsel angepasst sind. Dabei ist vorgesehen, dass der Brühkammerkolben 37 einen Anstich 91 aufweist, um nach dem Befüllen der Brühkammer 36 mit dem Kaffeepad 90 den Boden anzustechen bzw. spätestens beim Zuführen des Brühkolbens 52 in der Brühposition 72 vor dem Zuführen von heißem Wasser angestochen wird. Der Brühkolben 52 weist einen oberen Anstich 92 auf, um den Deckel des Kaffeepads 90 anzustechen bzw. zu öffnen. Alle übrigen Funktionen und Merkmale entsprechen der in den Figuren 2 bis 9 beschriebenen Brühgruppe 17.

Somit ist die erfindungsgemäße Brühgruppe 17 sowohl für frisch gemahlenes Kaffeemehl als auch für Kaffeepads einsetzbar.

Es versteht sich, dass anstelle eines Kaffeemehls bzw. Kaffeepulvers weitere Stoffe und Stoffgemische verwendet werden können, aus dem zumindest teilweise Substanzen herausgelöst oder die aufgelöst werden sollen, so dass eine um die herausgelösten oder aufgelösten Substanzen angereicherte Flüssigkeit zur weiteren Verwendung bereitgestellt wird.

## Patentansprüche

1. Brühgruppe, insbesondere für eine Kaffeemaschine (11) zur Zubereitung von Kaffee und Espresso, mit einer Brühkammer (36) zur Aufnahme von gemahlenem Kaffeepulver, mit einem Brühkolben (37) zumindest zum Schließen der Brühkammer (36), mit einem Einlassanschluss (43) für Heißwasser und mit einem Auslassanschluss (59) für das gebrühte Getränk, mit einer Befüllöffnung (51) und mit einer Entleerungsöffnung zum Auswerfen eines Kaffeekuchens (82), wobei die Brühkammer (36) in einem Brühkammerschlitten (32) vorgesehen ist und der Brühkammerschlitten (32) innerhalb eines Brühkammerrahmens (31), der den Brühkolben (52), die Befüllöffnung (51) und die Entleerungsöffnung (73) umfasst, durch zumindest eine Linearbewegung mittels eines Antriebs (21) in eine Befüllposition (71), in eine Brühposition (72), in eine Brühkammerentleerungsposition (73), in eine Abstreiferposition (74) und zurück in eine Befüllposition (71) überführbar ist und wobei die Brühkammer (36) einen Brühkammerkolben (37) aufweist, der innerhalb der Brühkammer (36) auf und ab bewegbar vorgesehen ist, **dadurch gekennzeichnet, dass** der Brühkammerkolben (37) eine Brühkammerwelle (39) aufweist, die in einer Kulisse (42) im Brühkammerrahmen (31) geführt ist und eine Hubstellung des Brühkammerkolbens (37) in Abhängigkeit der Linearbewegung des Brühkammerschlittens (32) in die Befüllposition (71), die Brühposition (72), die Brühkammerentleerungsposition (73) und in die Abstreiferposition (74) ansteuerbar ist.

2. Brühgruppe nach Anspruch 1, **dadurch gekennzeichnet, dass** der Brühkammerschlitten (32) durch eine Führung (33), die vorzugsweise rechtwinklig zur Befüllöffnung (51) und dem Brühkolben (52) ausgerichtet ist, verfahrbar in dem Brühkammerrahmen (31) aufgenommen ist.

3. Brühgruppe nach Anspruch 2, **dadurch gekennzeichnet, dass** die Führung (33) des Brühkammerschlittens (32) zumindest eine Langlochausnehmung (35) mit einer darin geführten Lagerachse (34) umfasst, die mit dem elektrischen Antrieb (21) bewegungsgekoppelt ist.

4. Brühgruppe nach einem der vorhergehenden Ansprüche, **dadurch gekennzeichnet, dass** der elektrische Antrieb (21) als Linearantrieb ausgebildet ist und vorzugsweise einen Riemen-, Seil- oder Kettenantrieb umfasst, wobei der Riemen, das Seil oder die Kette in der Größe im Wesentlichen der Langlochausnehmung (35) entspricht oder größer ausgebildet ist und dass vorzugsweise durch einen an dem Riemen, dem Seil oder der Kette angeordneten Mitnehmer die Lagerachse (34) des Brühkammerschlittens (32) gekoppelt ist.

5. Brühgruppe nach Anspruch 1, **dadurch gekennzeichnet, dass** die Kulisse benachbart zur Führung (33) angeordnet ist.

6. Brühgruppe nach Anspruch 1, **dadurch gekennzeichnet, dass** die Lagerachse (34) des Brühkammerschlittens (32) und die Brühkammerwelle (39) in einer gemeinsamen Achse vorgesehen sind, welche insbesondere der Bewegungsrichtung des Brühkammerkolbens (37), vorzugsweise rechtwinklig zur Linearbewegung, ausgerichtet ist.

7. Brühgruppe nach Anspruch 1, **dadurch gekennzeichnet, dass** die Kulisse (42) einen liegenden, U-förmigen Bahnverlauf mit einer zwischen einem ersten und zweiten Schenkel (76, 79) verlaufenden Querverbindung (78) aufweist, wodurch die Position des Brühkammerkolbens (37) entsprechend zur Befüllposition (71), Brühposition (72) und Brühkammerentleerungsposition (73) und Abstreiferposition (74) einstellbar ist.

8. Brühgruppe nach einem der vorhergehenden Ansprüche, **dadurch gekennzeichnet, dass** der Brühkammerschlitten (32) durch eine ansteuerbare Linearbewegung in der Befüllposition (71) anordenbar ist, in der der Brühkammerschlitten (32) unterhalb der Befüllöffnung (51) und der Brühkammerkolben (37) in einer unteren Endlage anordenbar ist.

9. Brühgruppe nach einem der vorhergehenden Ansprüche, **dadurch gekennzeichnet, dass** der Brühkammerschlitten (32) durch eine weitere Linearbewegung aus der Befüllposition (71) in die Brühposition (72) überführbar ist und vorzugsweise die Brühkammerwelle (39) entlang des ersten Schenkels (76) der Kulisse (42) geführt wird und vorzugsweise während dem Überführen des Brühkammerschlittens (32) aus der Befüllposition (71) in die Brühposition (72) die Einlassöffnung (43) mit einem Ventil eines Erhitzers (16) verbindbar ist.

10. Brühgruppe nach einem der vorhergehenden Ansprüche, **dadurch gekennzeichnet, dass** der Brühkolben (52) durch einen Motor (22) auf und ab bewegbar angetrieben ist und in der Brühposition (72) abgesenkt wird und die Brühkammer (36) schließt, so dass anschließend heißes Wasser durch die Brühkammer (36) hindurchführbar ist.

11. Brühgruppe nach einem der vorhergehenden Ansprüche, **dadurch gekennzeichnet, dass** nach dem Brühen und Abheben des Brühkolbens (52) aus der Brühkammer (36) der Brühkammerschlitten (32) durch eine weitere Linearbewegung in die Brühkammerentleerungsposition (73) überführbar ist, wobei vorzugsweise die Brühkammerwelle (39) über die Querverbindung (78) aufgrund einer im ersten Schenkel (76) benachbart zur Querverbindung (78) angeordneten Sperre (77) in den zweiten Schenkel (79) verfahrbar ist und der Brühkammerkolben (37) vorzugsweise bündig zu einer Stirnfläche (66) der Brühkammer (36) anordenbar ist.

12. Brühgruppe nach einem der vorhergehenden Ansprüche, **dadurch gekennzeichnet, dass** eine Anpresskraft des Brühkolbens (52) zum Verdichten des Kaffeemehl in der Brühkammer (36) durch einen Drehmomentsensor des Motors (22) oder durch die Erfassung der Leistungsaufnahme des Motors einstellbar ist.

13. Brühgruppe nach einem der vorhergehenden Ansprüche, **dadurch gekennzeichnet, dass** der Brühkammerschlitten (32) durch eine weitere Linearbewegung in eine Abstreiferposition (74) überführbar ist, wobei vorzugsweise die Brühkammerwelle (39) entlang dem zweiten Schenkel (79) geführt wird und die Stirnfläche (66) der Brühkammer (36) sowie der Brühkammerkolben (37) zum Abstreifen des Kaffeekuchens (82) unterhalb einer Abstreiferkante (84) hindurchführbar sind und vorzugsweise während der Verfahrbewegung des Brühkammerschlittens (32) aus der Brühkammerentleerungsposition (73) in die Abstreiferposition (74) ein Absenken des Brühkammerkolbens (37) durch eine in der Querverbindung (78) der Kulisse (42) angeordnete Sperre (81) verhindert ist und vorzugsweise der Brühkammerschlitten (32) durch eine weitere Linearbewegung aus der Abstreiferposition (74) in die Befüllposition (71) überführbar ist und der Brühkammerkolben (37) in eine untere Hubendlage überführbar ist.

14. Brühgruppe nach einem der vorhergehenden Ansprüche, **dadurch gekennzeichnet, dass** an dem Brühkammerschlitten (32) eine Abstreiferlippe (67) vorgesehen ist, welche entlang eines Obersiebes (56) des Brühkolbens (52) verfahrbar ist.

15. Brühgruppe nach einem der vorhergehenden Ansprüche, **dadurch gekennzeichnet, dass** die Brühkammer (36) und der Brühkammerkolben (37) jeweils einen Anstich (91, 92) zur Aufnahme von Kaffeemehl in einem vorportionierten Kaffeepad (90) bzw. einer Kaffeekapsel aufweist.

## Claims

1. A brewing unit, in particular for a coffee maker (11) for the preparation of coffee and espresso, having a brewing chamber for receiving ground coffee powder, having a brewing piston (37) for at least closing off the brewing chamber (36), having an inlet port (43) for hot water and an outlet port (59) for the brewed beverage, having a filling opening (51) and an emptying opening for ejecting a cake of leached-out coffee powder (82), the brewing chamber (36) being provided in a brewing chamber slide (32) and the brewing chamber slide (32) being transferable within a brewing chamber frame (31) that includes the brewing piston (52), the filling opening (51) and the emptying opening (52) through at least one linear movement operated by at least one drive (21) to a filling position (71), to a brewing position (72), to a brewing chamber emptying position (73), to a stripper position (74), and back to a filling position (71), said brewing chamber (36) having a brewing chamber piston (37) that is movable up and down within the brewing chamber (36), **characterised in that** the brewing chamber piston (37) has a brewing chamber shaft (39) that is guided within a motion link (42) provided in the brewing chamber frame (31) and **in that**, depending on the linear movement of the brewing chamber slide (32) to the filling position (71), to the brewing position (72), to the brewing chamber emptying position (73), and to the stripper position (74), an adequate travel position of the brewing chamber piston (37) is activatable.

2. The brewing unit as claimed in claim 1, **characterised in that** the brewing chamber slide (32) is movably accommodated in the brewing chamber frame (31) by means of a guide (33) that is preferably oriented at a right angle with respect to the filling opening (51) and to the brewing piston (52).

3. The brewing unit as claimed in claim 2, **characterised in that** the guide (33) of the brewing chamber slide (32) includes at least one elongate-hole recess (35) having a bearing axis (34) guided therein which is movably coupled to the drive (21).

4. The brewing unit as claimed in any of the preceding claims, **characterised in that** the electric drive (21) is realised as a linear drive and preferably comprises a belt drive, a cable drive or a chain drive, with the belt, the cable or the chain being dimensioned so as to substantially correspond to, or be larger than, the elongate-hole recess (35), and **in that** the bearing axis (34) of the brewing chamber slide (32) is preferably coupled by an engaging piece arranged on said belt, cable or chain.

5. The brewing unit as claimed in claim 1, **characterised in that** the motion link is disposed adjacent to the guide (33).

6. The brewing unit as claimed in claim 1, **characterised in that** the bearing axis (34) of the brewing chamber slide (32) and the brewing chamber shaft (39) are conceived to lie in a common axis which is oriented in particular in the direction of movement of the brewing chamber piston (37), preferably at a right angle with respect to said linear movement.

7. The brewing unit as claimed in claim 1, **characterised in that** the motion link (42) has a trajectory in the form of a horizontal U shape having a cross-connection (78) extending between the first and second branches (76, 79), which makes it possible to adequately set the adequate position of the brewing chamber piston (37) with respect to the filling position (71), to the brewing position (72), to the brewing chamber emptying position (73), and to the stripper position (74).

8. The brewing unit as claimed in any of the preceding claims, **characterised in that** by means of an activatable linear movement, the brewing chamber slide (32) may be arranged in the filling position (71), with the brewing chamber slide (32) disposed below the filling opening (51) and the brewing chamber piston (37) disposed in a lower stop position.

9. The brewing unit as claimed in any of the preceding claims, **characterised in that** by means of a further linear movement, the brewing chamber slide (32) may be transferred from the filling position (71) to the brewing position (72) and preferably the brewing chamber shaft (39) is guided along the first branch (76) of the motion link (42), and **in that** preferably the inlet port (43) may be connected to a valve of a heater (16) as the brewing chamber slide (32) is transferred from the filling position (71) to the brewing position (72).

10. The brewing unit as claimed in any of the preceding claims, **characterised in that** the brewing piston (52) is driven by a motor (22) so as to be movable up and down, and is lowered when in the brewing position (72) to close the brewing chamber (36) such that subsequently hot water may be passed through the brewing chamber (36).

11. The brewing unit as claimed in any of the preceding claims, **characterised in that** following the brewing and the lifting of the brewing piston (52) from the brewing chamber (36), the brewing chamber slide (32) may be transferred, by means of a further linear movement, to the brewing chamber emptying position (73), with the brewing chamber shaft (39) preferably movable to the second branch (79) via the cross-connection (78) due to a locking device (77) disposed in the first branch (76) adjacent to said cross-connection (78) and the brewing chamber piston (37) preferably capable of being disposed flush with an end face (66) of the brewing chamber (36).

12. The brewing unit as claimed in any of the preceding claims, **characterised in that** a compressive force of the brewing piston (52) for compacting the coffee powder within the brewing chamber (36) may be regulated via a torque sensor of the motor (22) or via the detection of the power consumption of the motor.

13. The brewing unit as claimed in any of the preceding claims, **characterised in that** by means of a further linear movement, the brewing chamber slide (32) may be transferred to a stripper position (74), with the brewing chamber shaft (39) being preferably guided along the second branch (79) and the end face (66) of the brewing chamber (36) as well as the brewing chamber piston (37) being preferably passed below a stripper edge (84) for stripping off the cake of leached-out coffee powder (82), and with a lowering of the brewing chamber shaft (73) being preferably prevented by means of a locking device (81) disposed in the cross-connection (78) of the motion link (42) during the travel of the brewing chamber slide (32) from the brewing chamber emptying position (73) to the stripper position (74), and with the brewing chamber slide (32) being preferably transferable through a further linear movement from the stripper position (74) to the filling position (71) and the brewing chamber piston (37) being transferable to a lower travel end position.

14. The brewing unit as claimed in any of the preceding claims, **characterised in that** the brewing chamber slide (32) is provided with a stripper lip (67) which is movable along an upper sieve (56) of the brewing piston (52).

15. The brewing unit as claimed in any of the preceding claims, **characterised in that** the brewing chamber (36) and the brewing chamber piston (37) each have a piercing member (91, 92) for receiving coffee powder provided in a preportioned coffee pad (90) or in a coffee capsule.

## Revendications

1. Module d'infusion, en particulier pour une machine à café (11) destiné à la préparation de café et d'espresso, avec une chambre d'infusion (36) pour recevoir de la poudre de café moulu, avec un piston d'infusion (37) au moins pour fermer la chambre d'infusion (36), avec un raccord d'entrée (43) pour l'eau chaude et un raccord de sortie (59) pour la boisson infusée, avec un orifice de remplissage (51) et avec un orifice d'évacuation pour éjecter une galette de marc de café (82), la chambre d'infusion (36) étant prévue dans un chariot de chambre d'infusion (32) et le chariot de chambre d'infusion (32) pouvant passer, à l'intérieur d'un cadre de chambre d'infusion (31) qui comprend le piston d'infusion (52), l'orifice de remplissage (51) et l'orifice d'évacuation (73), grâce à au moins un mouvement linéaire engendré par un entraînement (21), dans une position de remplissage (71), dans une position d'infusion (72), dans une position de vidage de chambre d'infusion (73), dans une position de raclage (74) et de nouveau dans une position de remplissage (71), la chambre d'infusion (36) présentant un piston de chambre d'infusion (37) qui est prévu de manière à pouvoir monter et descendre à l'intérieur de la chambre d'infusion (36), **caractérisé en ce que** le piston de chambre d'infusion (37) présente un arbre de chambre d'infusion (39) qui est guidé dans une coulisse (42) située dans le cadre de chambre d'infusion (31), et **en ce qu'**une position de course du piston de chambre d'infusion (37) peut être activée en fonction du mouvement linéaire amenant le chariot de chambre d'infusion (32) dans la position de remplissage (71), la position d'infusion (72), la position de vidage de chambre d'infusion (73) et dans la position de raclage (74).

2. Module d'infusion selon la revendication 1, **caractérisé en ce que** le chariot de chambre d'infusion (32) est reçu de manière déplaçable dans le cadre de chambre d'infusion (31) par un guide (33) qui est disposé de préférence à angle droit par rapport à l'orifice de remplissage (51) et au piston d'infusion (52).

3. Module d'infusion selon la revendication 2, **caractérisé en ce que** le guide (33) du chariot de chambre d'infusion (32) comprend au moins un évidement oblong (35) dans lequel est guidé un axe de palier (34) qui est couplé de manière mobile à l'entraînement électrique (21).

4. Module d'infusion selon l'une quelconque des revendications précédentes, **caractérisé en ce que** l'entraînement électrique (21) est réalisé sous forme d'entraînement linéaire et comprend de préférence un entraînement par courroie, par câble ou par chaîne, la courroie, le câble ou la chaîne correspondant, quant à la grandeur, essentiellement à l'évidement oblong (35) ou étant supérieur à celui-ci, et **en ce que** l'axe de palier (34) du chariot de chambre d'infusion (32) est couplé de préférence grâce à un entraîneur disposé sur la courroie, le câble ou la chaîne.

5. Module d'infusion selon la revendication 1, **caractérisé en ce que** la coulisse est disposée de manière contiguë au guide (33).

6. Module d'infusion selon la revendication 1, **caractérisé en ce que** l'axe de palier (34) du chariot de chambre d'infusion (32) et l'arbre de chambre d'infusion (39) sont prévus sur un axe commun qui est orienté en particulier dans le sens de déplacement du piston de chambre d'infusion (37), de préférence à angle droit par rapport au mouvement linéaire.

7. Module d'infusion selon la revendication 1, **caractérisé en ce que** la coulisse (42) présente une trajectoire en forme de U couché avec un assemblage transversal (78) s'étendant entre une première et une deuxième branche (76, 79), ce qui fait que la position du piston de chambre d'infusion (37) peut être réglée en conformité par rapport à la position de remplissage (71), à la position d'infusion (72) et à la position de vidage de chambre d'infusion (73) et à la position de raclage (74).

8. Module d'infusion selon l'une quelconque des revendications précédentes, **caractérisé en ce que** le chariot de chambre d'infusion (32) peut être disposé, grâce à un mouvement linéaire activable, dans la position de remplissage (71) dans laquelle le chariot de chambre d'infusion (32) peut être disposé au-dessous de l'orifice de remplissage (51) et le piston de chambre d'infusion (37) dans une position de fin de course inférieure.

9. Module d'infusion selon l'une quelconque des revendications précédentes, **caractérisé en ce que** le chariot de chambre d'infusion (32) peut passé, grâce à un autre mouvement linéaire, de la position de remplissage (71) dans la position d'infusion (72), et **en ce que** de préférence l'arbre de chambre d'infusion (39) est guidé le long de la première branche (76) de la coulisse (42) et que, de préférence pendant que le chariot de chambre d'infusion (32) passe de la position de remplissage (71) à la position d'infusion (72), l'orifice d'entrée (43) peut être relié à une soupape d'un réchauffeur (16).

10. Module d'infusion selon l'une quelconque des revendications précédentes, **caractérisé en ce que** le piston d'infusion (52) est entraîné par un moteur (22) de manière à monter et descendre et est abaissé lorsqu'il se trouve dans la position d'infusion (72) et qu'il ferme la chambre d'infusion (36) de sorte que de l'eau chaude puisse ensuite passer à travers la chambre d'infusion (36).

11. Module d'infusion selon l'une quelconque des revendications précédentes, **caractérisé en ce que**, après que l'infusion soit terminée et que le piston d'infusion (52) se soit dissocié de la chambre d'infusion (36), le chariot de chambre d'infusion (32) peut passer, grâce à un autre mouvement linéaire, dans la position de vidage de chambre d'infusion (73), l'arbre de chambre d'infusion (39) pouvant de préférence être déplacé par l'intermédiaire de l'assemblage transversal (78) dans la deuxième branche (79), grâce à un bloqueur (77) disposé dans la première branche (76) de manière contiguë à l'assemblage transversal (78), et le piston de chambre d'infusion (37) pouvant être disposé de préférence de manière plane par rapport à une face frontale (66) de la chambre d'infusion (36).

12. Module d'infusion selon l'une quelconque des revendications précédentes, **caractérisé en ce qu'**une force de pression du piston d'infusion (52) destinée à densifier la mouture de café dans la chambre d'infusion (36) peut être réglée par un capteur de couple du moteur (22) ou par la saisie de la puissance absorbée du moteur.

13. Module d'infusion selon l'une quelconque des revendications précédentes, **caractérisé en ce que** le chariot de chambre d'infusion (32) peut passé, grâce à un autre mouvement linéaire, dans une position de raclage (74), l'arbre de chambre d'infusion (39) étant de préférence guidé le long de la deuxième branche (79), et la face frontale (66) de la chambre d'infusion (36) ainsi que le piston de chambre d'infusion (37) pouvant passer au-dessous du bord de raclage (84) afin de retirer la galette de marc de café (82), et **en ce que**, de préférence lorsque le chariot de chambre d'infusion (32) passe de la position de vidage de chambre d'infusion (73) dans la position de raclage (74), un abaissement du piston de chambre d'infusion (37) est empêché par un bloqueur (81) disposé dans l'assemblage transversal (78) de la coulisse (42) et que de préférence le chariot de chambre d'infusion (32) peut passer, grâce à un autre mouvement linéaire, de la position de raclage (74) à la position de remplissage (71) et que le piston de chambre d'infusion (37) peut passer dans une position de fin de course inférieure.

14. Module d'infusion selon l'une quelconque des revendications précédentes, **caractérisé en ce que** sur le chariot de chambre d'infusion (32) est prévue une lèvre racleuse (67) qui est déplaçable le long d'un filtre supérieur (56) du piston d'infusion (52).

15. Module d'infusion selon l'une quelconque des revendications précédentes, **caractérisé en ce que** la chambre d'infusion (36) et le piston de chambre d'infusion (37) présentent respectivement un élément de perçage (91, 92) destiné à recevoir de la mouture de café contenue dans une dosette de café (90) préportionnée ou dans une capsule de café.
